# EUROPEAN PATENT SPECIFICATION

(11) **EP 4 397 488 B1**
(45) Date of publication and mention of the grant of the patent: **12.08.2026**
(21) Application number: 22864497.7
(22) Date of filing: 29.08.2022
(51) Int. Cl.: B32B 27/28, C08L 23/26, C08L 33/08, D21H 19/82, B32B 27/08, B32B 27/32, B32B 27/30, C08L 23/0876, D21H 19/84, D21H 27/30, D21H 27/10

(54) **LAMINATE**
LAMINAT
STRATIFIÉ

(30) Priority: 03.09.2021 JP 2021143774
(43) Date of publication of application: 10.07.2024
(73) Proprietor: Mitsui Chemicals, Inc., Tokyo 104-0028 (JP)
(72) Inventor: KUSUMOTO, Masaya, Sodegaura-shi, Chiba 299-0265 (JP); NAKAHARA, Shoma, Sodegaura-shi, Chiba 299-0265 (JP)
(74) Representative: Hoffmann Eitle
(86) International application number: PCT/JP2022/032403
(87) International publication number: WO 2023/032915

(56) References cited:
- WO-A1-2015/186733
- WO-A1-2016/076130
- WO-A1-2018/142997
- WO-A1-2020/004355
- JP-A- 2000 107 268
- JP-A- 2000 280 415
- JP-A- 2008 105 374
- JP-A- 2020 199 676
- JP-A- H0 827 442
- US-A1- 2018 282 596
- US-A1- 2020 198 217

## Description

### TECHNICAL FIELD

The present invention relates to a laminate including a substrate and a resin layer.

### BACKGROUND ART

In various industrial fields, a laminate in which various functional resin layers are coated on a surface of a substrate is widely used. As the laminate, more specifically, for example, a laminate is known in which an aqueous dispersion of a resin is coated onto a substrate to be dried. Further, as the aqueous dispersion, for example, the following aqueous dispersion is known. That is, the aqueous dispersion contains a resin component and water. The resin component contains a composite particle (C) and a resin particle (E). The composite particle (C) contains an ethylene-unsaturated carboxylic acid copolymer (A) and an acrylic polymer (B). The resin particle (E) contains an ethylene-unsaturated carboxylic acid copolymer (A) as an olefin copolymer (D) (ref: for example, Patent Document 1 (Example 1)).

### Citation List

### Patent Document

Patent Document 1: International Publication No. 2016/076130

### SUMMARY OF THE INVENTION

### PROBLEM TO BE SOLVED BY THE INVENTION

The laminate may require further more excellent blocking resistance in accordance with its use.

In addition, the laminate further requires improvement in water resistance, oil resistance, heat sealing properties, and production efficiency.

The present invention provides a laminate having excellent blocking resistance, water resistance, oil resistance, heat sealing properties, and production efficiency.

### MEANS FOR SOLVING THE PROBLEM

The present invention [1] includes a laminate including a substrate, a first resin layer disposed on at least one side of the substrate and containing a first resin component, and a second resin layer disposed on one side of the first resin layer and containing a second resin component, wherein the first resin component contains a first ethylene-unsaturated carboxylic acid copolymer (A1) and a first acrylic polymer (B1); a ratio of the first ethylene-unsaturated carboxylic acid copolymer (A1) is 25% by mass or more and 90% by mass or less with respect to the total amount of the first resin component; a glass transition temperature of the first acrylic polymer (B1) is - 30°C or more and 15°C or less; the second resin component contains a second ethylene-unsaturated carboxylic acid copolymer (A2); and a ratio of the second ethylene-unsaturated carboxylic acid copolymer (A2) is 95% by mass or more with respect to the total amount of the second resin component.

The present invention [2] includes the laminate described in the above-described [1], wherein the first resin component contains a composite particle (C1) containing the first ethylene-unsaturated carboxylic acid copolymer (A1) and the first acrylic polymer (B1).

The present invention [3] includes the laminate described in the above-described [1] or [2], wherein an amount of the first resin layer is 1 g/m² or more and 14 g/m² or less, an amount of the second resin layer is 1 g/m² or more and 14 g/m² or less, and the total sum of the amount of the first resin layer and the amount of the second resin layer is 2 g/m² or more and 15 g/m² or less.

### EFFECT OF THE INVENTION

The laminate of the present invention includes a substrate, a first resin layer containing a first ethylene-unsaturated carboxylic acid copolymer (A1) and a first acrylic polymer (B1), and a second resin layer containing a second ethylene-unsaturated carboxylic acid copolymer (A2). In addition, in the first resin layer, the ratio of the first ethylene-unsaturated carboxylic acid copolymer (A1) is adjusted within a predetermined range. In addition, in the first resin layer, the glass transition temperature of the first acrylic polymer (B1) is adjusted within the predetermined range. Furthermore, in the second resin layer, the ratio of the second ethylene-unsaturated carboxylic acid copolymer (A2) is a predetermined value or more.

In such a laminate, the second resin layer has excellent blocking resistance. Therefore, the laminate has the excellent blocking resistance. Further, the first resin layer has excellent water resistance and oil resistance. Therefore, the laminate has the excellent water resistance and oil resistance.

Furthermore, the first resin layer has the excellent blocking resistance. Therefore, even when the second resin layer is not disposed, the substrate and the first resin layer have excellent conveyance efficiency, and the second resin layer has excellent lamination efficiency. As a result, production efficiency of the laminate is improved.

In addition, by disposing the second resin layer on one side of the first resin layer, the laminate develops excellent heat sealing properties.

As a result, the laminate of the present invention has the excellent blocking resistance, water resistance, oil resistance, heat sealing properties, and production efficiency.

### BRIEF DESCRIPTION OF THE DRAWINGS

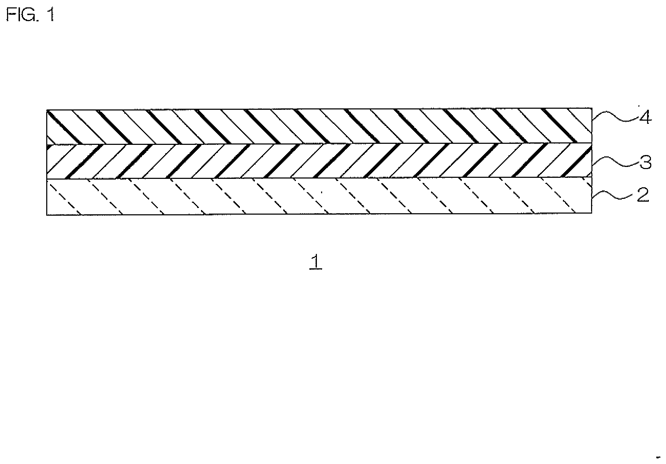

FIG. 1 shows a schematic view for illustrating one embodiment of a laminate of the present invention.

### DESCRIPTION OF EMBODIMENTS

In FIG. 1, a laminate 1 includes a substrate 2, a first resin layer 3 which is disposed (laminated) on a surface of one side (upper side on the plane of the sheet) of the substrate 2, and a second resin layer 4 which is disposed (laminated) on the surface of one side (upper side on the plane of the sheet) of the first resin layer 3.

Examples of the substrate 2 include fiber substrates, plastic substrates, and metal substrates. Examples of the fiber substrate include paper, woven fabric, and nonwoven fabric. An example of the plastic substrate includes a film made of a resin. Examples of the resin include cellophane, polyethylene, ethylene-vinyl acetate copolymer, ionomer, polypropylene, polyamide (nylon), polyester, polyvinyl chloride, polyvinylidene chloride, polyvinyl alcohol, ethylene-vinyl alcohol copolymer, polycarbonate, polystyrene, and polyacrylonitrile copolymer. An example of the metal substrate includes a thin film made of a metal. Examples of the metal include aluminum, gold, silver, copper, nickel, zinc, titanium, cobalt, indium, and chromium.

Also, an example of the substrate 2 includes a vapor deposition film. The vapor deposition film is formed by depositing the above-described metal and/or an oxide thereof on a film made of the above-described resin.

These substrates 2 may be used alone or in combination of two or more. As the substrate 2, preferably, a fiber substrate is used, more preferably, paper is used.

The substrate 2 may be subjected to a surface treatment as needed. Examples of the surface treatment include a corona discharge treatment and a chemical conversion treatment.

A thickness of the substrate 2 is, for example, 0.1 µm or more, preferably 1 µm or more. Further, the thickness of the substrate 2 is, for example, 1000 µm or less, preferably 500 µm or less.

In FIG. 1, the first resin layer 3 is laminated on the surface of one side of the substrate 2. The first resin layer 3 contains a first resin component.

More specifically, the first resin layer 3 is, for example, a dried coating film of a dispersion liquid of the first resin component (hereinafter, may be referred to as a first coating material).

The first resin component contains a first ethylene-unsaturated carboxylic acid copolymer (A1) and a first acrylic polymer (B1).

The first ethylene-unsaturated carboxylic acid copolymer (A1) is obtained by copolymerization of a monomer component for A1 (a1). The monomer component for A1 (a1) contains ethylene and an unsaturated carboxylic acid.

The unsaturated carboxylic acid is a monomer having both at least one ethylenically unsaturated bond and a carboxy group in combination. Examples of the unsaturated carboxylic acid include unsaturated monobasic acid, unsaturated dibasic acid, and salts of these. Examples of the unsaturated monobasic acid include acrylic acid, methacrylic acid, and crotonic acid. Examples of the unsaturated dibasic acid include maleic acid, fumaric acid, and itaconic acid. Examples of the salt include sodium salts, potassium salts, and ammonium salts. These may be used alone or in combination of two or more. As the unsaturated carboxylic acid, from the viewpoint of water resistance and oil resistance, preferably, an unsaturated monobasic acid is used, more preferably, an acrylic acid, a methacrylic acid, and salts of these are used, particularly preferably, a methacrylic acid and a salt thereof are used.

Further, the unsaturated carboxylic acid may be used in combination with vinyl esters as needed. Examples of the vinyl esters include carboxylic acid vinyl esters. Examples of the carboxylic acid vinyl ester include vinyl acetate and vinyl propionate. These may be used alone or in combination of two or more. When the vinyl esters and the unsaturated carboxylic acid are used in combination, the ratio of these is appropriately set in accordance with its purpose and use.

In the monomer component for A1 (a1), preferably, the vinyl esters are not used in combination. More specifically, the monomer component for A1 (a1) preferably consists of the ethylene and the unsaturated carboxylic acid.

In the monomer component for A1 (a1), a content ratio of the ethylene to the unsaturated carboxylic acid (and the vinyl esters to be blended as needed (hereinafter, the same applies)) is appropriately set in accordance with its purpose and use.

For example, the ratio of the ethylene is, for example, 75% by mass or more, preferably 78% by mass or more, more preferably 80% by mass or more with respect to the total amount of the ethylene and the unsaturated carboxylic acid. In addition, the ratio of the ethylene is, for example, 90% by mass or less, preferably 88% by mass or less, more preferably 85% by mass or less with respect to the total amount of the ethylene and the unsaturated carboxylic acid.

Further, for example, the ratio of the unsaturated carboxylic acid is, for example, 10% by mass or more, preferably 12% by mass or more, more preferably 15% by mass or more with respect to the total amount of the ethylene and the unsaturated carboxylic acid. In addition, the ratio of the unsaturated carboxylic acid is, for example, 25% by mass or less, preferably 22% by mass or less, more preferably 20% by mass or less with respect to the total amount of the ethylene and the unsaturated carboxylic acid.

In the monomer component for A1 (a1), it is possible to obtain the excellent water resistance and oil resistance when the content ratio of the ethylene and the unsaturated carboxylic acid is within the above-described range.

A method for polymerizing the monomer component for A1 (a1) is not particularly limited, and a known polymerization method is used. For example, the above-described monomer component for A1 (a1) is polymerized in water under a normal pressure. In the polymerization, for example, a polymerization initiator is blended.

The polymerization initiator is not particularly limited, and examples thereof include hydrogen peroxide, organic peroxide, and persulfate. Examples of the organic peroxide include cumene hydroperoxide, t-butyl hydroperoxide, benzoyl peroxide, t-butyl peroxy-2-ethylhexanoate, t-butyl peroxybenzoate, and lauroyl peroxide. Examples of the persulfate include ammonium persulfate, potassium persulfate, and sodium persulfate. An example of the azo compound includes azobisisobutyronitrile. Further, as the polymerization initiator, a known redox initiator is also used. These may be used alone or in combination of two or more. A mixing ratio of the polymerization initiator is appropriately set in accordance with its purpose and use.

In the polymerization of the monomer component for A1 (a1), an emulsifier (surfactant) is blended as needed. Examples of the emulsifier include anionic surfactants, nonionic surfactants, and cationic surfactants.

Examples of the anionic surfactant include sodium dodecyl sulfate, sodium dodecyl benzene sulfonate, sodium alkyl diphenyl ether disulfonate, sodium alkyl naphthalene sulfonate, sodium dialkyl sulfosuccinate, sodium stearate, potassium oleate, sodium dioctyl sulfosaccinate, sodium polyoxyethylene alkyl ether sulfate, sodium polyoxyethylene alkyl ether sulfate, sodium polyoxyethylene alkylphenyl ether sulfate dialkyl sulfosuccinate, sodium stearate, sodium oleate, and tert-octylphenoxyethoxypolyethoxyethyl sodium sulfate. Examples of the nonionic surfactant include polyoxyethylene lauryl ether, polyoxyethylene octylphenyl ether, polyoxyethylene oleylphenyl ether, polyoxyethylene nonylphenyl ether, oxyethylene-oxypropylene block copolymer, tert-octylphenoxyethyl polyethoxyethanol, and nonylphenoxyethyl polyethoxyethanol. Examples of the cationic surfactant include lauryltrimethylammonium chloride and stearyltrimethylammonium chloride. These may be used alone or in combination of two or more. As the emulsifier, preferably, an anionic surfactant is used, more preferably, sodium dodecylbenzenesulfonate is used. The mixing ratio of the emulsifier is appropriately set in accordance with its purpose and use.

In addition, in the polymerization of the monomer component for A1 (a1), an additive is added as needed. Examples of the additive include pH modifiers, metal ion sealing agents, molecular weight regulators, and chain transfer agents. These may be used alone or in combination of two or more. The mixing ratio of the additive is appropriately set in accordance with its purpose and use.

The method for polymerizing the monomer component for A1 (a1) is described in a known document. Examples of the known document include Japanese Examined Patent Publications No. H7-008933, H5-039975, H4-030970, S42-000275, S42-023085, and S45-029909 and Japanese Unexamined Patent Publication No. S51-062890.

Further, a polymerization temperature and polymerization time of the monomer component for A1 (a1) are appropriately set in accordance with a kind and an amount of the monomer component for A1 (a1).

Thus, the first ethylene-unsaturated carboxylic acid copolymer (A1) is obtained as the polymer of the monomer component for A1 (a1).

The first ethylene-unsaturated carboxylic acid copolymer (A1) is preferably neutralized from the viewpoint of dispersion stability. In the neutralization, a neutralizing agent is added to a reaction completed liquid of the above-described polymerization.

Examples of the neutralizing agent include basic compounds. Examples of the basic compound include inorganic basic compounds and organic basic compounds. Examples of the inorganic basic compound include sodium hydroxide and potassium hydroxide. Examples of the organic basic compound include ammonia, triethylamine, triethanolamine, and dimethylethanolamine. These may be used alone or in combination of two or more.

An addition amount of the neutralizing agent is, for example, 5 mol or more, preferably 30 mol or more, more preferably 50 mol or more with respect to 100 mol of the carboxy group in the first ethylene-unsaturated carboxylic acid copolymer (A1). Further, the addition amount of the neutralizing agent is, for example, 200 mol or less, preferably 150 mol or less with respect to 100 mol of the carboxy group in the first ethylene-unsaturated carboxylic acid copolymer (A1).

Further, after the neutralizing agent is added to the reaction completed liquid, preferably, the reaction completed liquid is retained at a predetermined temperature for predetermined time. A retention temperature is, for example, 40°C or more, preferably 50°C or more. Further, the retention temperature is, for example, 90°C or less, preferably 80°C or less. Further, retention time is, for example, 30 minutes or more, preferably 1 hour or more. Further, the retention time is, for example, 12 hours or less, preferably 10 hours or less.

Thus, in the above-described reaction completed liquid, the copolymer is neutralized and hydrated, and furthermore, the copolymer is subjected to swelling and a softening treatment.

Also, when the unsaturated monobasic acid and/or the unsaturated dibasic acid are/is used as the unsaturated carboxylic acid, the unsaturated monobasic acid and/or the unsaturated dibasic acid become(s) salts of these by the above-described neutralization and hydration.

A degree of neutralization of the first ethylene-unsaturated carboxylic acid copolymer (A1) is, for example, 30% or more, preferably 50% or more, and for example, 200% or less, preferably 150% or less.

A weight average molecular weight (in terms of standard polystyrene) of the first ethylene-unsaturated carboxylic acid copolymer (A1) is, for example, 10000 or more, preferably 30000 or more. Further, the weight average molecular weight (in terms of standard polystyrene) of the first ethylene-unsaturated carboxylic acid copolymer (A1) is, for example, 200000 or less, preferably 150000 or less. The weight average molecular weight is measured by gel permeation chromatography (GPC) (hereinafter, the same applies).

Further, a melting point of the first ethylene-unsaturated carboxylic acid copolymer (A1) is, for example, 55°C or more, preferably 65°C or more, and for example, 110°C or less, preferably 100°C or less. The melting point can be determined by DSC (differential scanning calorimetry) (hereinafter, the same applies).

In addition, in the above-described method, preferably, a dispersion liquid is obtained in which a resin particle of the first ethylene-unsaturated carboxylic acid copolymer (A1) is dispersed in water.

In the dispersion liquid of the first ethylene-unsaturated carboxylic acid copolymer (A1), the solid concentration is, for example, 10% by mass or more, preferably 20% by mass or more. In addition, in the dispersion liquid of the first ethylene-unsaturated carboxylic acid copolymer (A1), the solid concentration is, for example, 60% by mass or less, preferably 50% by mass or less.

Further, an average particle size (measurement method: light scattering measurement) of the first ethylene-unsaturated carboxylic acid copolymer (A1) is, for example, 0.01 µm or more, preferably 0.02 µm or more. Further, the average particle size (measurement method: light scattering measurement) of the first ethylene-unsaturated carboxylic acid copolymer (A1) is, for example, 10 µm or less, preferably 1 µm or less.

The dispersion liquid of the first ethylene-unsaturated carboxylic acid copolymer (A1) can be also obtained as a commercially available product. Examples of the commercially available product include trade name: "CHEMIPEARL S100" (ethylene content in raw material: 85% by mass, kind of unsaturated carboxylic acid: methacrylic acid, sodium hydroxide neutralized product, solid content: 27%, manufactured by Mitsui Chemicals, Inc.); trade name: "CHEMIPEARL S80N" (ethylene content in raw material: 80% by mass, kind of unsaturated carboxylic acid: acrylic acid, ammonium hydroxide neutralized product, solid content of 24%, manufactured by Mitsui Chemicals, Inc.); trade name "CHEMIPEARL S650" (ethylene content in raw material: 80% by mass, kind of unsaturated carboxylic acid: methacrylic acid, sodium hydroxide neutralized product, solid content of 27%, manufactured by Mitsui Chemicals, Inc.); and trade name: "CHEMIPEARL S300 (ethylene content in raw material: 86.5% by mass, kind of unsaturated carboxylic acid: methacrylic acid, sodium hydroxide neutralized product, solid content of 35%, manufactured by Mitsui Chemicals, Inc.). These may be used alone or in combination of two or more.

Such a first ethylene-unsaturated carboxylic acid copolymer (A1) improves the water resistance and the oil resistance of the first resin layer 3. In addition, the above-described first ethylene-unsaturated carboxylic acid copolymer (A1) improves blocking resistance of the first resin layer 3. Further, the above-described first ethylene-unsaturated carboxylic acid copolymer (A1) improves heat sealing properties of the laminate 1 including the first resin layer 3 and the second resin layer 4.

The first acrylic polymer (B1) is obtained by polymerization of a monomer component for B1 (b1). The monomer component for B1 (b1) contains, for example, a (meth)acrylate. (Meth)acryl represents an acryl and/or a methacryl (hereinafter, the same applies).

An example of the (meth)acrylate includes a (meth)acrylate having an alkyl portion having 1 to 12 carbon atoms. Examples of the (meth)acrylate having an alkyl portion having 1 to 12 carbon atoms include methyl (meth)acrylate, ethyl (meth)acrylate, propyl (meth)acrylate, n-butyl (meth)acrylate, iso-butyl (meth)acrylate, s-butyl (meth)acrylate, t-butyl (meth)acrylate, 2-ethylhexyl (meth)acrylate, and lauryl (meth)acrylate. These may be used alone or in combination of two or more.

The kind of the (meth)acrylate is selected so that the glass transition temperature of the first acrylic polymer (B1) is within a range to be described later.

More specifically, as the (meth)acrylate, preferably, a (meth)acrylate having an alkyl portion having 1 to 4 carbon atoms is used, more preferably, a methyl (meth)acrylate and an n-butyl (meth)acrylate are used, further more preferably, a methyl methacrylate, an n-butyl methacrylate, and an n-butyl acrylate are used, particularly preferably, an n-butyl acrylate is used.

In addition, the monomer component for B1 (b1) may contain a copolymerizable monomer as needed. The copolymerizable monomer is a monomer copolymerizable with the (meth)acrylate.

Examples of the copolymerizable monomer include functional group-containing vinyl monomers.

Examples of the functional group-containing vinyl monomer include carboxy group-containing vinyl monomers, hydroxyl group-containing vinyl monomers, amino group-containing vinyl monomers, glycidyl group-containing vinyl monomers, cyano group-containing vinyl monomers, sulfonic acid group-containing vinyl monomers, an acetoacetoxy group-containing vinyl monomers, phosphoric acid group-containing compounds, amide group-containing vinyl monomers, and salts of these.

Examples of the carboxy group-containing vinyl monomer include (meth)acrylate, maleic anhydride, maleic acid, fumaric acid, itaconic acid, and crotonic acid. Examples of the hydroxyl group-containing vinyl monomer include 2-hydroxyethyl (meth)acrylate and 2-hydroxypropyl (meth)acrylate. Examples of the amino group-containing vinyl monomer include 2-aminoethyl (meth)acrylate, 2-(N-methylamino)ethyl (meth)acrylate, and 2-(N,N-dimethylamino)ethyl (meth)acrylate. An example of the glycidyl group-containing vinyl monomer includes a glycidyl (meth)acrylate. An example of the cyano group-containing vinyl monomer includes a (meth)acrylonitrile. Examples of the sulfonic acid group-containing vinyl monomer include allyl sulfonic acid and methallyl sulfonic acid. An example of the acetoacetoxy group-containing vinyl monomer includes an acetoacetoxyethyl (meth)acrylate. An example of the phosphoric acid group-containing compound includes 2-methacryloyloxyethyl acid phosphate. An example of the amide group-containing vinyl monomer includes (meth)acrylamide. Further, examples of the salt include sodium salts, potassium salts, and ammonium salts. These may be used alone or in combination of two or more.

Further, examples of the copolymerizable monomer include vinyl esters, aromatic vinyl monomers, N-substituted unsaturated carboxylic acid amides, heterocyclic vinyl compounds, vinylidene halide compounds, α-olefins, dienes, and cross-linking vinyl monomers.

Examples of the vinyl esters include vinyl acetate and vinyl propionate. Examples of the aromatic vinyl monomer include styrene, α-methylstyrene, and divinylbenzene. An example of the N-substituted unsaturated carboxylic acid amide includes an N-methylol (meth)acrylamide. An example of the heterocyclic vinyl compound includes a vinylpyrrolidone. Examples of the vinylidene halide compound include vinylidene chloride and vinylidene fluoride. Examples of the α-olefins include ethylene and propylene. An example of the dienes includes a butadiene. An example of the cross-linking vinyl monomer includes a compound containing two or more vinyl groups, and more specifically, examples thereof include methylenebis(meth)acrylamide, divinylbenzene, and polyethylene glycol chain-containing di(meth)acrylate. These may be used alone or in combination of two or more.

The kind of the copolymerizable monomer is selected so that the glass transition temperature of the first acrylic polymer (B1) is within the range to be described later.

More specifically, as the copolymerizable monomer, preferably, a functional group-containing vinyl monomer and an aromatic vinyl monomer are used, more preferably, a carboxy group-containing vinyl monomer and styrene are used, further more preferably, styrene is used.

In addition, in the monomer component for B1, the ratio of the (meth)acrylate and the copolymerizable monomer is selected so that the glass transition temperature of the first acrylic polymer (B1) is within the range to be described later.

For example, the ratio of the (meth)acrylate is, for example, 10% by mass or more, preferably 20% by mass or more, more preferably 30% by mass or more, further more preferably 40% by mass or more, particularly preferably 50% by mass or more with respect to the total amount of the (meth)acrylate and the copolymerizable monomer. In addition, the ratio of the (meth)acrylate is, for example, 90% by mass or less, preferably 80% by mass or less, more preferably 70% by mass or less, further more preferably 60 % by mass or less with respect to the total amount of the (meth)acrylate and the copolymerizable monomer.

In addition, the ratio of the copolymerizable monomer is, for example, 10% by mass or more, preferably 20% by mass or more, more preferably 30% by mass or more, further more preferably 40 % by mass or more with respect to the total amount of the (meth)acrylate and the copolymerizable monomer. In addition, the ratio of the copolymerizable monomer is, for example, 90% by mass or less, preferably 80% by mass or less, more preferably 70% by mass or less, further more preferably 60% by mass or less, particularly preferably 50% by mass or less with respect to the total amount of the (meth)acrylate and the copolymerizable monomer.

In addition, in the monomer component for B1, the copolymerizable monomer is preferably selected in accordance with a form of the first acrylic polymer (B1).

For example, when the first ethylene-unsaturated carboxylic acid copolymer (A1) and the first acrylic polymer (B1) do not form a composite particle (C1) to be described later, and the first acrylic polymer (B1) forms a single resin particle, preferably, the copolymerizable monomer contains the functional group-containing vinyl monomer and the aromatic vinyl monomer.

For example, the ratio of the functional group-containing vinyl monomer is, for example, 1% by mass or more, preferably 3% by mass or more, more preferably 5% by mass or more with respect to the total amount of the copolymerizable monomer. In addition, the ratio of the functional group-containing vinyl monomer is, for example, 80% by mass or less, preferably 70% by mass or less, more preferably 50% by mass or less, further more preferably 30% by mass or less, particularly preferably 10% by mass or less with respect to the total amount of the copolymerizable monomer.

Further, for example, the ratio of the aromatic vinyl monomer is, for example, 20% by mass or more, preferably 30% by mass or more, more preferably 50% by mass or more, further more preferably 70% by mass or more, particularly preferably 90% by mass or more with respect to the total amount of the copolymerizable monomer. Further, for example, the ratio of the aromatic vinyl monomer is, for example, 99% by mass or less, preferably 97% by mass or less, more preferably 95% by mass or less with respect to the total amount of the copolymerizable monomer.

In addition, for example, when the first ethylene-unsaturated carboxylic acid copolymer (A1) and the first acrylic polymer (B1) form the composite particle (C1) to be described later, preferably, the copolymerizable monomer does not contain the functional group-containing vinyl monomer. More preferably, the ratio of the aromatic vinyl monomer is, for example, 100% by mass with respect to the total amount of the copolymerizable monomer.

The method for polymerizing the monomer component for B1 (b1) is not particularly limited, and a known polymerization method is used. For example, the above-described monomer component for B1 (b1) is polymerized in water under the normal pressure. In the polymerization, for example, the above-described polymerization initiator is blended at the appropriate ratio.

In addition, in the polymerization of the monomer component for B1 (b1), the above-described emulsifier (surfactant) and additive are blended at the appropriate ratio as needed.

The polymerization temperature and the polymerization time of the monomer component for B1 (b1) are appropriately set in accordance with the kind and the amount of the monomer component for B1 (b1). For example, a polymerization temperature is, for example, 30°C or more, preferably 50°C or more. Further, the polymerization temperature is, for example, 95°C or less, preferably 85°C or less. Further, the polymerization time is, for example, 1 hour or more, preferably 2 hours or more. Further, the polymerization time is, for example, 30 hours or less, preferably 20 hours or less.

Thus, the first acrylic polymer (B1) is obtained as the polymer of the monomer component for B1 (b1).

The weight average molecular weight (in terms of standard polystyrene) of the first acrylic polymer (B1) is, for example, 5000 or more, preferably 10000 or more. Further, the weight average molecular weight (in terms of standard polystyrene) of the first acrylic polymer (B1) is, for example, 1 million or less, preferably 0.5 million or less.

Further, the glass transition temperature of the first acrylic polymer (B1) is -30°C or more, preferably -10°C or more, more preferably -5°C or more.

When the glass transition temperature of the first acrylic polymer (B1) is above the above-described lower limit, the first resin layer 3 has the excellent blocking resistance. Therefore, even when the second resin layer 4 is not disposed, the substrate 2 and the first resin layer 3 have excellent conveyance efficiency, and the second resin layer 4 has excellent lamination efficiency. As a result, production efficiency of the laminate 1 is improved.

Further, the glass transition temperature of the first acrylic polymer (B1) is 15°C or less, preferably 10°C or less, more preferably 5°C or less.

When the glass transition temperature of the first acrylic polymer (B1) is below the above-described upper limit, the first resin layer 3 has the excellent water resistance and oil resistance. As a result, the laminate 1 has the excellent water resistance and oil resistance.

The glass transition temperature is calculated based on an FOX formula (hereinafter, the same applies).

In addition, in the above-described method, preferably, a dispersion liquid is obtained in which the resin particle of the first acrylic polymer (B1) is dispersed in water.

In the dispersion liquid of the first acrylic polymer (B1), the solid concentration is, for example, 10% by mass or more, preferably 20% by mass or more. In addition, in the dispersion liquid of the first acrylic polymer (B1), the solid concentration is, for example, 60% by mass or less, preferably 50% by mass or less.

The first resin layer 3 includes the above-described first acrylic polymer (B1), so that it has the excellent water resistance and oil resistance.

When the first resin component contains the first ethylene-unsaturated carboxylic acid copolymer (A1) and the first acrylic polymer (B1), it may further contain another resin.

Examples of the other resin include known binder resins, and more specifically, examples thereof include polyester resins and polyurethane resins.

The first resin component preferably does not contain the other resin, and consists of the first ethylene-unsaturated carboxylic acid copolymer (A1) and the first acrylic polymer (B1).

The ratio of the first ethylene-unsaturated carboxylic acid copolymer (A1) is 25% by mass or more, preferably 30% by mass or more, more preferably 40% by mass or more, further more preferably 50% by mass or more, particularly preferably 60% by mass or more with respect to the total amount of the first resin component.

When the ratio of the first ethylene-unsaturated carboxylic acid copolymer (A1) is above the above-described lower limit, the first resin layer 3 has the excellent blocking resistance. Therefore, even when the second resin layer 4 is not disposed, the substrate 2 and the first resin layer 3 have the excellent conveyance efficiency, and the production efficiency of the laminate 1 is improved.

In addition, the ratio of the first ethylene-unsaturated carboxylic acid copolymer (A1) is 90% by mass or less, preferably 85% by mass or less, more preferably 80% by mass or less, further more preferably 75% by mass or less, particularly preferably 70% by mass or less with respect to the total amount of the first resin component.

When the ratio of the first ethylene-unsaturated carboxylic acid copolymer (A1) is below the above-described upper limit, the first resin layer 3 has the excellent water resistance and oil resistance. As a result, the laminate 1 has the excellent water resistance and oil resistance.

In addition, the ratio of the first acrylic polymer (B1) is 10% by mass or more, preferably 15% by mass or more, more preferably 20% by mass or more, further more preferably 25% by mass or more, particularly preferably 30% by mass or more with respect to the total amount of the first resin component.

In addition, the ratio of the first acrylic polymer (B1) is 75% by mass or less, preferably 70% by mass or less, more preferably 60% by mass or less, further more preferably 50% by mass or less, particularly preferably 40% by mass or less with respect to the total amount of the first resin component.

In the first resin component, the form of the first ethylene-unsaturated carboxylic acid copolymer (A1) and the form of the first acrylic polymer (B1) are not particularly limited.

For example, the first resin component may contain the single resin particle made of the first ethylene-unsaturated carboxylic acid copolymer (A1) and the single resin particle made of the first acrylic polymer (B1).

In such a case, the dispersion liquid of the first resin component (first coating material) is prepared by a known method. For example, first, the monomer component for A1 (a1) is polymerized by the above-described method. Thus, the dispersion liquid of the single resin particle made of the first ethylene-unsaturated carboxylic acid copolymer (A1) (hereinafter, may be referred to as an A1 dispersion liquid) is obtained.

Further, the monomer component for B1 (b1) is polymerized separately from the above-described A1 dispersion liquid by the above-described method. Thus, the dispersion liquid of the single resin particle made of the first acrylic polymer (B1) (hereinafter, may be referred to as a B1 dispersion liquid) is obtained.

Then, the A1 dispersion liquid and the B1 dispersion liquid are mixed so that the ratio of the first ethylene-unsaturated carboxylic acid copolymer (A1) and the ratio of the first acrylic polymer (B1) are within the above-described range.

Thus, the dispersion liquid of the first resin component (first coating material) is obtained as a liquid mixture of the dispersion liquid of the first ethylene-unsaturated carboxylic acid copolymer (A1) and the first acrylic polymer (B1).

In addition, the first ethylene-unsaturated carboxylic acid copolymer (A1) and the first acrylic polymer (B1) can form the composite particle (C1).

In other words, the first resin component may contain the composite particle (C1) containing the first ethylene-unsaturated carboxylic acid copolymer (A1) and the first acrylic polymer (B1).

From the viewpoint of the water resistance, the oil resistance, and the blocking resistance, the first resin component preferably contains the composite particle (C1) containing the first ethylene-unsaturated carboxylic acid copolymer (A1) and the first acrylic polymer (B1).

The composite particle (C1) contains, for example, the first ethylene-unsaturated carboxylic acid copolymer (A1) and the first acrylic polymer (B1), and preferably consists of the first ethylene-unsaturated carboxylic acid copolymer (A1) and the first acrylic polymer (B1).

The structure of the composite particle (C1) is not particularly limited, and examples thereof include a core shell structure and a dispersion structure. In the core shell structure, a core layer is covered with a shell layer. In the dispersion structure, a dispersion phase is dispersed in a continuous phase. As the structure of the composite particle (C1), preferably, a dispersion structure is used.

In the dispersion structure, for example, the continuous phase may be the first ethylene-unsaturated carboxylic acid copolymer (A1), and the dispersion phase may be the first acrylic polymer (B1). In addition, in the dispersion structure, for example, the continuous phase may be the first acrylic polymer (B1), and the dispersion phase may be the first ethylene-unsaturated carboxylic acid copolymer (A1). Preferably, the continuous phase is the first ethylene-unsaturated carboxylic acid copolymer (A1), and the dispersion phase is the first acrylic polymer (B1).

Such a composite particle (C1) is produced by the known method.

For example, first, the dispersion liquid of the first ethylene-unsaturated carboxylic acid copolymer (A1) is prepared by the above-described method. Next, the first acrylic polymer (B1) is synthesized in the dispersion liquid of the first ethylene-unsaturated carboxylic acid copolymer (A1). Thus, the composite particle (C1) containing the first ethylene-unsaturated carboxylic acid copolymer (A1) and the first acrylic polymer (B1) is obtained.

More specifically, in the above-described method, the dispersion liquid is obtained in which the composite particle (C1) is dispersed in water (hereinafter, may be referred to as a C1 dispersion liquid).

The average particle size (measurement method: light scattering measurement) of the composite particle (C1) is, for example, 1 nm or more, preferably 10 nm or more. Also, the average particle size (measurement method: light scattering measurement) of the composite particle (C1) is, for example, 10 µm or less, preferably 1 µm or less.

Further, the average particle size of the composite particle (C1) observed with an electron microscope is, for example, 50 nm or more, preferably 60 nm or more, more preferably 80 nm or more. Further, the average particle size of the composite particle (C1) observed with the electron microscope is, for example, 300 nm or less, more preferably 200 nm or less, further more preferably 120 nm or less.

Then, the dispersion liquid of the composite particle (C1) (hereinafter, the C1 dispersion liquid) can be used as it is as the dispersion liquid of the first resin component (first coating material).

Further, the A1 dispersion liquid and/or the B1 dispersion liquid, and the C1 dispersion liquid may be mixed. The mixing ratio of these is adjusted so that the ratio of the first ethylene-unsaturated carboxylic acid copolymer (A1) and the ratio of the first acrylic polymer (B1) are within the above-described range.

As the dispersion liquid of the first resin component (first coating material), more preferably, the liquid mixture of the dispersion liquid of the composite particle (C1) (C1 dispersion liquid) and the dispersion liquid of the first ethylene-unsaturated carboxylic acid copolymer (A1) (A1 dispersion liquid) is used.

In addition, the dispersion liquid of the first resin component (first coating material) may contain an additive in addition to the first resin component as needed.

Examples of the additive include known additives such as fillers, emulsifiers, curing agents, cross-linking agents, film-forming aids, defoaming agents, antifouling agents, leveling agents, tackifiers, hardness imparting agents, preservatives, thickeners, antifreeze agents, dispersants, inorganic pigments, and organic pigments. These additives may be used alone or in combination of two or more. The mixing ratio and the timing of blending of the additive are appropriately set in accordance with its purpose and use.

In the dispersion liquid of the first resin component (first coating material), the solid concentration is, for example, 10% by mass or more, preferably 20% by mass or more. In addition, in the dispersion liquid of the first resin component (first coating material), the solid concentration is, for example, 60% by mass or less, preferably 50% by mass or less.

The first resin layer 3 is, for example, the dried coating film of the dispersion liquid of the first resin component described above (first coating material). In other words, the first resin layer 3 can be, for example, obtained by coating the first coating material on the surface of one side of the substrate 2 to be dried.

The method for coating the first coating material is not particularly limited. Examples of the coating method include blade coating methods, air knife coating methods, curtain coating methods, gravure coating methods, roll coating methods, immersion coating methods, and spray coating methods.

The method for drying the first coating material is not particularly limited. Examples of the drying method include natural drying and heat drying. A drying temperature is, for example, 20°C or more, preferably 80°C or more. The drying temperature is, for example, 200°C or less, preferably 180°C or less. Drying time is, for example, 1 second or more, preferably 10 seconds or more. The drying time is, for example, 1 hour or less, preferably 30 minutes or less.

Thus, the first resin layer 3 is obtained as the dried coating film of the first coating material.

The amount of first resin layer 3 is, for example, 0.5 g/m² or more, preferably 1 g/m² or more from the viewpoint of the blocking resistance, the water resistance, the oil resistance, and the heat sealing properties.

Also, the amount of the first resin layer 3 is, for example, 30 g/m² or less, preferably 14 g/m² or less from the viewpoint of the blocking resistance, the water resistance, the oil resistance, and the heat sealing properties.

Such a first resin layer 3 is the dried coating film of the dispersion liquid of the first resin component described above (first coating material). Therefore, the first resin layer 3 has the excellent water resistance and oil resistance, and further, has the excellent blocking resistance and productivity.

In FIG. 1, the second resin layer 4 is laminated on the surface of one side of the first resin layer 3. The second resin layer 4 contains the second resin component.

More specifically, the second resin layer 4 is, for example, the dried coating film of the dispersion liquid of the second resin component (hereinafter, may be referred to as the second coating material).

The second resin component contains a second ethylene-unsaturated carboxylic acid copolymer (A2).

The second ethylene-unsaturated carboxylic acid copolymer (A2) is obtained by copolymerization of the monomer component for A2 (a2). The monomer component for A2 (a2) contains ethylene and the above-described unsaturated carboxylic acid.

As the unsaturated carboxylic acid, from the viewpoint of the water resistance and the oil resistance, preferably, an unsaturated monobasic acid is used, more preferably, an acrylic acid, a methacrylic acid, and salts of these are used, particularly preferably, a methacrylic acid and salts thereof are used.

In addition, in the monomer component for A2 (a2), the unsaturated carboxylic acid may be used in combination with the above-described vinyl esters as needed. When the vinyl esters and the unsaturated carboxylic acids are used in combination, the ratio of these is appropriately set in accordance with its purpose and use.

In the monomer component for A2 (a2), preferably, the vinyl esters are not used in combination. More specifically, the monomer component for A2 (a2) preferably consists of the ethylene and the unsaturated carboxylic acid.

In the monomer component for A2 (a2), the content ratio of the ethylene to the unsaturated carboxylic acid (and the vinyl esters to be blended as needed (hereinafter, the same applies)) is appropriately set in accordance with its purpose and use.

For example, the ratio of the ethylene is, for example, 75% by mass or more, preferably 78% by mass or more, more preferably 80% by mass or more with respect to the total amount of the ethylene and the unsaturated carboxylic acid. In addition, the ratio of the ethylene is, for example, 90% by mass or less, preferably 88% by mass or less, more preferably 85% by mass or less with respect to the total amount of the ethylene and the unsaturated carboxylic acid.

Further, for example, the ratio of the unsaturated carboxylic acid is, for example, 10% by mass or more, preferably 12% by mass or more, more preferably 15% by mass or more with respect to the total amount of the ethylene and the unsaturated carboxylic acid. In addition, the ratio of the unsaturated carboxylic acid is, for example, 25% by mass or less, preferably 22% by mass or less, more preferably 20% by mass or less with respect to the total amount of the ethylene and the unsaturated carboxylic acid.

In the monomer component for A2 (a2), when the content ratio of the ethylene and the unsaturated carboxylic acid is within the above-described range, it is possible to obtain the excellent water resistance and oil resistance.

A composition of the monomer component for A2 (a2) may be the same as or different from the composition of the above-described monomer component for A1 (a1). In other words, the composition of the second ethylene-unsaturated carboxylic acid copolymer (A2) may be the same as or different from the composition of the above-described first ethylene-unsaturated carboxylic acid copolymer (A1).

From the viewpoint of adhesion between the first resin layer 3 and the second resin layer 4, preferably, the composition of the second ethylene-unsaturated carboxylic acid copolymer (A2) is the same as the composition of the first ethylene-unsaturated carboxylic acid copolymer (A1).

The method for polymerizing the monomer component for A2 (a2) is not particularly limited, and the known polymerization method is used. For example, the above-described monomer component for A2 (a2) is polymerized in water under the normal pressure. In the polymerization, for example, the above-described polymerization initiator is blended at the appropriate ratio.

In addition, in the polymerization of the monomer component for A2 (a2), the above-described emulsifier (surfactant) and additive are blended at the appropriate ratio.

The polymerization temperature and the polymerization time of the monomer component for A2 (a2) are appropriately set in accordance with the kind and the amount of the monomer component for A2 (a2).

Thus, the second ethylene-unsaturated carboxylic acid copolymer (A2) is obtained as the polymer of the monomer component for A2 (a2).

The second ethylene-unsaturated carboxylic acid copolymer (A2) is neutralized and hydrated, and furthermore, is subjected to the swelling and the softening treatment from the viewpoint of dispersion stability in the same manner as the first ethylene-unsaturated carboxylic acid copolymer (A1).

Also, when the unsaturated monobasic acid and/or the unsaturated dibasic acid are/is used as the unsaturated carboxylic acid, the unsaturated monobasic acid and/or the unsaturated dibasic acid become(s) salts of these by the above-described neutralization and hydration.

The degree of neutralization of the second ethylene-unsaturated carboxylic acid copolymer (A2) is, for example, 30% or more, preferably 50% or more, and for example, 200% or less, preferably 150% or less.

The weight average molecular weight (in terms of standard polystyrene) of the second ethylene-unsaturated carboxylic acid copolymer (A2) is, for example, 10000 or more, preferably 30000 or more. Further, the weight average molecular weight (in terms of standard polystyrene) of the second ethylene-unsaturated carboxylic acid copolymer (A2) is, for example, 200000 or less, preferably 150000 or less.

The melting point of the second ethylene-unsaturated carboxylic acid copolymer (A2) is, for example, 55°C or more, preferably 65°C or more, and for example, 110°C or less, preferably 100°C or less.

In addition, in the above-described method, preferably, the dispersion liquid is obtained in which the resin particle of the second ethylene-unsaturated carboxylic acid copolymer (A2) is dispersed in water.

In the dispersion liquid of the second ethylene-unsaturated carboxylic acid copolymer (A2), the solid concentration is, for example, 10% by mass or more, preferably 20% by mass or more. In addition, in the dispersion liquid of the second ethylene-unsaturated carboxylic acid copolymer (A2), the solid concentration is, for example, 60% by mass or less, preferably 50% by mass or less.

Further, the average particle size (measurement method: light scattering measurement) of the second ethylene-unsaturated carboxylic acid copolymer (A2) is, for example, 0.01 µm or more, preferably 0.02 µm or more. Further, the average particle size (measurement method: light scattering measurement) of the second ethylene-unsaturated carboxylic acid copolymer (A2) is, for example, 10 µm or less, preferably 1 µm or less.

The dispersion liquid of the second ethylene-unsaturated carboxylic acid copolymer (A2) can be also obtained as the commercially available product. The commercially available product of the dispersion liquid of the second ethylene-unsaturated carboxylic acid copolymer (A2) is, for example, the same as the commercially available product of the dispersion liquid of the first ethylene-unsaturated carboxylic acid copolymer (A1) described above. These may be used alone or in combination of two or more.

Such a second ethylene-unsaturated carboxylic acid copolymer (A2) improves the water resistance and the oil resistance of the second resin layer 4. Further, the above-described second ethylene-unsaturated carboxylic acid copolymer (A2) improves the blocking resistance of the second resin layer 4. Further, the above-described second ethylene-unsaturated carboxylic acid copolymer (A2) improves the heat sealing properties of the laminate 1 including the first resin layer 3 and the second resin layer 4.

The second resin component may further contain another resin as long as it contains the second ethylene-unsaturated carboxylic acid copolymer (A2).

An example of the other resin includes the second acrylic polymer (B2).

The second acrylic polymer (B2) is obtained by polymerization of the monomer component for B2 (b2). The monomer component for B2 (b2) contains, for example, the above-described (meth)acrylate. In addition, the monomer component for B2 (b2) may contain the above-described copolymerizable monomer at the appropriate ratio as needed.

For example, the ratio of the (meth)acrylate is, for example, 10% by mass or more, preferably 20% by mass or more, more preferably 30% by mass or more, further more preferably 40% by mass or more, particularly preferably 50% by mass or more with respect to the total amount of the (meth)acrylate and the copolymerizable monomer. In addition, the ratio of the (meth)acrylate is, for example, 90% by mass or less, preferably 80% by mass or less, more preferably 70% by mass or less, further more preferably 60 % by mass or less with respect to the total amount of the (meth)acrylate and the copolymerizable monomer.

In addition, the ratio of the copolymerizable monomer is, for example, 10% by mass or more, preferably 20% by mass or more, more preferably 30% by mass or more, further more preferably 40 % by mass or more with respect to the total amount of the (meth)acrylate and the copolymerizable monomer. In addition, the ratio of the copolymerizable monomer is, for example, 90% by mass or less, preferably 80% by mass or less, more preferably 70% by mass or less, further more preferably 60% by mass or less, particularly preferably 50% by mass or less with respect to the total amount of the (meth)acrylate and the copolymerizable monomer.

In addition, in the monomer component for B2, the copolymerizable monomer is preferably selected in accordance with the form of the second acrylic polymer (B2).

For example, when the second ethylene-unsaturated carboxylic acid copolymer (A2) and the second acrylic polymer (B2) do not form a composite particle (C2) to be described later and the second acrylic polymer (B2) forms the single resin particle, preferably, the copolymerizable monomer contains the functional group-containing vinyl monomer and the aromatic vinyl monomer.

In such a case, in the monomer component for B2, the ratio of the functional group-containing vinyl monomer with respect to the total amount of the copolymerizable monomer is, for example, the same as the ratio of the functional group-containing vinyl monomer with respect to the total amount of the copolymerizable monomer in the monomer component for B1 described above.

In addition, for example, when the second ethylene-unsaturated carboxylic acid copolymer (A2) and the second acrylic polymer (B2) form the composite particle (C2) to be described later, preferably, the copolymerizable monomer does not contain the functional group-containing vinyl monomer. More preferably, the ratio of the aromatic vinyl monomer is, for example, 100% by mass with respect to the total amount of the copolymerizable monomer.

The composition of the monomer component for B2 (b2) may be the same as or different from the composition of the above-described monomer component for B1 (b1). In other words, the composition of the second acrylic polymer (B2) may be the same as or different from the composition of the above-described first acrylic polymer (B1).

From the viewpoint of the adhesion between the first resin layer 3 and the second resin layer 4, preferably, the composition of the second acrylic polymer (B2) is the same as the composition of the first acrylic polymer (B1).

Further, the other resin is not limited to the second acrylic resin (B2), and examples thereof include the above-described binder resins.

The ratio of the other resin (including the second acrylic resin (B2)) is 5% by mass or less, preferably 3% by mass or less, more preferably 1% by mass or less, particularly preferably 0% by mass with respect to the total amount of the second resin component.

In other words, the ratio of the second ethylene-unsaturated carboxylic acid copolymer (A2) is 95% by mass or more, preferably 97% by mass or more, more preferably 99% by mass or more with respect to the total amount of the second resin component.

When the ratio of the second ethylene-unsaturated carboxylic acid copolymer (A2) is above the above-described lower limit, the second resin layer 4 has the excellent blocking resistance, water resistance, oil resistance, and heat sealing properties.

The ratio of the second ethylene-unsaturated carboxylic acid copolymer (A2) is particularly preferably 100% by mass with respect to the total amount of the second resin component from the viewpoint of the blocking resistance, the water resistance, the oil resistance, and the heat sealing properties.

In other words, the second resin component particularly preferably does not contain the other resin (including the second acrylic resin (B2)), and consists of the second ethylene-unsaturated carboxylic acid copolymer (A2).

In the second resin component, the form of the second ethylene-unsaturated carboxylic acid copolymer (A2) and the form of the other resin (including the second acrylic resin (B2)) to be blended as needed are not particularly limited.

For example, the second resin component can contain only the single resin particle made of the second ethylene-unsaturated carboxylic acid copolymer (A2).

In such a case, the dispersion liquid of the second resin component (second coating material) is prepared by the known method. For example, first, the monomer component for A2 (a2) is polymerized by the above-described method. Thus, the dispersion liquid of the single resin particle made of the second ethylene-unsaturated carboxylic acid copolymer (A2) (hereinafter, A2 dispersion liquid) is obtained.

Then, the dispersion liquid of the second ethylene-unsaturated carboxylic acid copolymer (A2) (hereinafter, may be referred to as an A2 dispersion liquid) can be used as it is as the dispersion liquid of the second resin component (the second coating material).

In addition, the second coating material may be the liquid mixture of the dispersion liquid of the second ethylene-unsaturated carboxylic acid copolymer (A2) and the second acrylic polymer (B2) (hereinafter, may be referred to as a B2 dispersion liquid) in the same manner as the above-described first coating material.

In such a case, the monomer component for B1 (b1) is polymerized separately from the above-described A2 dispersion liquid by the above-described method. Thus, the dispersion liquid of the single resin particle made of the first acrylic polymer (B1) (hereinafter, may be referred to as the B1 dispersion liquid) is obtained.

Then, the A2 dispersion liquid and the B2 dispersion liquid are mixed so that the ratio of the second ethylene-unsaturated carboxylic acid copolymer (A2) and the ratio of the second acrylic polymer (B2) are within the above-described range.

Thus, the dispersion liquid of the second resin component (second coating material) is obtained as the liquid mixture of the dispersion liquid of the second ethylene-unsaturated carboxylic acid copolymer (A2) and the second acrylic polymer (B2).

In addition, the second ethylene-unsaturated carboxylic acid copolymer (A2) and the second acrylic polymer (B2) can form the composite particle (C2).

In other words, the second resin component may contain the composite particle (C2) containing the second ethylene-unsaturated carboxylic acid copolymer (A2) and the second acrylic polymer (B2).

The composite particle (C2) contains, for example, the second ethylene-unsaturated carboxylic acid copolymer (A2) and the second acrylic polymer (B2), and preferably consists of the second ethylene-unsaturated carboxylic acid copolymer (A2) and the second acrylic polymer (B2).

The structure of the composite particle (C2) is not particularly limited, and an example thereof includes the same structure as that of the above-described composite particle (C1). Also, the composite particle (C2) is produced by the same method as that of the composite particle (C1).

Then, the dispersion liquid (hereinafter, may be referred to as the C2 dispersion liquid) in which the composite particle (C2) is dispersed in water can be used as it is as the dispersion liquid of the second resin component (second coating material).

Further, the A2 dispersion liquid, the B1 dispersion liquid, and/or the C1 dispersion liquid may be mixed as needed. The mixing ratio of these is adjusted so that the ratio of the second ethylene-unsaturated carboxylic acid copolymer (A2) and the ratio of the second acrylic polymer (B2) are within the above-described range.

As the dispersion liquid of the second resin component (second coating material), preferably, the dispersion liquid (A2 dispersion liquid) of the single resin particle of the second ethylene-unsaturated carboxylic acid copolymer (A2) is used.

In addition, the dispersion liquid of the second resin component (second coating material) may contain the above-described additive as needed. The mixing ratio and the timing of blending of the additive are appropriately set in accordance with its purpose and use.

In the dispersion liquid of the second resin component (second coating material), the solid concentration is, for example, 10% by mass or more, preferably 20% by mass or more. In addition, in the dispersion liquid of the second resin component (second coating material), the solid concentration is, for example, 60% by mass or less, preferably 50% by mass or less.

The second resin layer 4 is, for example, the dried coating film of the dispersion liquid of the second resin component described above (second coating material). In other words, the second resin layer 4 can be obtained, for example, by coating the second coating material onto the surface of one side of the first resin layer 3 to be dried.

An example of the method for coating the second coating material includes the above-described coating method.

The second coating material may be, for example, coated onto the dried coating film of the first resin component. Further, the second coating material may be coated onto the coating film of the first resin component before drying (undried coating film).

The method for drying the second coating material is not particularly limited. Examples of the drying method include natural drying and heat drying. The drying temperature is, for example, 20°C or more, preferably 80°C or more. The drying temperature is, for example, 200°C or less, preferably 180°C or less. The drying time is, for example, 1 second or more, preferably 10 seconds or more. The drying time is, for example, 1 hour or less, preferably 30 minutes or less.

Thus, the second resin layer 4 is obtained as the dried coating film of the second coating material.

The amount of the second resin layer 4 is, for example, 0.5 g/m² or more, preferably 1 g/m² or more from the viewpoint of the blocking resistance, the water resistance, the oil resistance, and the heat sealing properties.

Also, the amount of the second resin layer 4 is, for example, 30 g/m² or less, preferably 14 g/m² or less from the viewpoint of the blocking resistance, the water resistance, the oil resistance, and the heat sealing properties.

Such a second resin layer 4 is the dried coating film of the dispersion liquid of the second resin component described above. Therefore, the second resin layer 4 has the particularly excellent blocking resistance and heat sealing properties.

Further, the second coating material may be collectively coated with the above-described first coating material. In such a case, as the coating method, for example, a curtain coating method is used.

When the first coating material and the second coating material are collectively coated, the first coating material and the second coating material are collectively dried. In such a case, examples of the drying method include natural drying and heat drying. The drying temperature is, for example, 20°C or more, preferably 80°C or more. The drying temperature is, for example, 200°C or less, preferably 180°C or less. The drying time is, for example, 1 second or more, preferably 10 seconds or more. The drying time is, for example, 1 hour or less, preferably 30 minutes or less.

Thus, the first resin layer 3 is obtained as the dried coating film of the first coating material. Further, along with this, the second resin layer 4 is obtained as the dried coating film of the second coating material.

The total sum of the amount of the first resin layer 3 and the amount of the second resin layer 4 is, for example, 1 g/m² or more, preferably 2 g/m² or more from the viewpoint of the blocking resistance, the water resistance, the oil resistance, and the heat sealing properties.

Also, the total sum of the amount of the first resin layer 3 and the amount of the second resin layer 4 is, for example, 30 g/m² or less, preferably 15 g/m² or less from the viewpoint of the blocking resistance, the water resistance, the oil resistance, and the heat sealing properties.

As described above, the laminate 1 including the substrate 2, the first resin layer 3, and the second resin layer 4 is obtained.

The total thickness of the laminate 1 is, for example, 0.1 µm or more, preferably 1 µm or more. Also, the total thickness of the laminate 1 is, for example, 1500 µm or less, preferably 1000 µm or less.

Such a laminate 1 includes the substrate 2, the first resin layer 3 containing the first ethylene-unsaturated carboxylic acid copolymer (A1) and the first acrylic polymer (B1), and the second resin layer 4 containing the second ethylene-unsaturated carboxylic acid copolymer (A2). In addition, in the first resin layer 3, the ratio of the first ethylene-unsaturated carboxylic acid copolymer (A1) is adjusted within a predetermined range. In addition, in the first resin layer 3, the glass transition temperature of the first acrylic polymer (B1) is adjusted within the predetermined range. Furthermore, in the second resin layer 4, the ratio of the second ethylene-unsaturated carboxylic acid copolymer (A2) is a predetermined value or more.

In such a laminate 1, the second resin layer 4 has the excellent blocking resistance. Therefore, the laminate 1 has the blocking resistance. Further, the first resin layer 3 has the excellent water resistance and oil resistance. Therefore, the laminate 1 has the excellent water resistance and oil resistance.

More specifically, in the laminate 1, the blocking resistance is the properties required for the layer which is disposed further outside (preferably, the topmost surface). On the other hand, the water resistance and the oil resistance are the properties required for the layer which is disposed further inside.

Thus, in the above-described laminate 1, the second resin layer 4 having the particularly excellent blocking resistance is disposed further outside. In addition, in the above-described laminate 1, the first resin layer 3 having the particularly excellent water resistance and oil resistance is disposed further inside.

Thus, the above-described laminate 1 has the excellent blocking resistance further outside, and also has the excellent water resistance and oil resistance further inside.

Furthermore, the first resin layer 3 has the excellent blocking resistance. Therefore, even when the second resin layer 4 is not disposed, the substrate 2 and the first resin layer 3 have the excellent conveyance efficiency, and the second resin layer 4 has the excellent lamination efficiency. As a result, the production efficiency of the laminate 1 is improved.

In addition, by disposing the second resin layer 4 on one side of the first resin layer 3, the laminate 1 has the excellent heat sealing properties.

As a result, the above-described laminate 1 has the excellent blocking resistance, water resistance, oil resistance, heat sealing properties, and production efficiency.

In the above-described description, the first resin layer 3 is directly disposed on the surface of one side of the substrate 2. However, the first resin layer 3 may not be directly disposed on the surface of the substrate 2. In other words, an intermediate layer may be also interposed between the substrate 2 and the first resin layer 3. Examples of the intermediate layer include undercoat layers and primer layers.

Further, in the above-described description, the second resin layer 4 is directly disposed on the surface of one side of the first resin layer 3. However, the second resin layer 4 may not be directly disposed on the surface of the first resin layer 3. In other words, the intermediate layer may be interposed between the first resin layer 3 and the second resin layer 4. Examples of the intermediate layer include undercoat layers and primer layers.

Further, the first resin layer 3 and the second resin layer 4 may be disposed on at least one side of the substrate 2. In other words, the first resin layer 3 and/or the second resin layer 4 may be disposed on the other side with respect to one side of the substrate 2.

Then, the above-described laminate 1 is preferably used as a packaging material in various industrial fields.

A wrapped material which is wrapped by the laminate 1 is not particularly limited. Examples of the wrapped material include food, fragrance, and industrial products. Examples of the food include sweets, tea leaves, and spices. Examples of the fragrance include tobacco and scented wood. Examples of the industrial product include pharmaceuticals and paper.

### Examples

Next, the present invention is further described based on Examples and Comparative Examples below. The present invention is however not limited by Examples and Comparative Examples. The specific numerical values in mixing ratio (content ratio), property value, and parameter used in the following description can be replaced with upper limit values (numerical values defined as "or less" or "below") or lower limit values (numerical values defined as "or more" or "above") of corresponding numerical values in mixing ratio (content ratio), property value, and parameter described in the above-described "DESCRIPTION OF EMBODIMENTS".

### (1) First Coating Material

### Preparation Example 1 (A1 Dispersion Liquid)

As the first ethylene-unsaturated carboxylic acid copolymer (A1), CHEMIPEARL S100 (ethylene content in raw material: 85% by mass, kind of unsaturated carboxylic acid: methacrylic acid, sodium hydroxide neutralized product, solid content of 27%, manufactured by Mitsui Chemicals, Inc.) was prepared. Thus, the A1 dispersion liquid was obtained.

### Preparation Example 2 (B1 Dispersion Liquid)

Styrene (44.5 parts by mass), 52.5 parts by mass of n-butyl acrylate, 3 parts by mass of methacrylic acid, and 0.2 parts by mass of n-dodecyl mercaptan (molecular weight modifier) were emulsified in 40 parts by mass of deionized water by 0.4 parts by mass of sodium dodecylbenzenesulfonate (emulsifier), and the obtained emulsified mixture was added dropwise to a reaction vessel for 2 hours, and thereafter, retained at 80°C for 2 hours to complete the polymerization. Thus, the first acrylic polymer (B1) was formed. Thus, the B1 dispersion liquid was obtained.

### Preparation Example 3 (C1 Dispersion Liquid)

As the first ethylene-unsaturated carboxylic acid copolymer (A1), 200 parts by mass of CHEMIPEARL S100 (ethylene content in raw material: 85% by mass, kind of unsaturated carboxylic acid: methacrylic acid, sodium hydroxide neutralized product, solid content of 27%, manufactured by Mitsui Chemicals, Inc.) and 27 parts by mass of deionized water were charged into the reaction vessel, the temperature thereof was increased to 80°C under the nitrogen stream, and 0.3 parts by mass of potassium persulfate was added.

Separately, 48.2 parts by mass of styrene, 51.8 parts by mass of n-butyl acrylate, and 0.2 parts by mass of n-dodecyl mercaptan (molecular weight modifier) were emulsified in 40 parts by mass of deionized water by 0.4 parts by mass of sodium dodecylbenzenesulfonate (emulsifier), and the obtained emulsified mixture was added dropwise to the reaction vessel for 2 hours, and thereafter, retained at 80°C for 2 hours to complete the polymerization. Thus, the first acrylic polymer (B1) was formed, and the dispersion liquid of the composite particle (C1) was obtained.

When a portion of the obtained aqueous dispersion was dried, and the solid particle was observed with the electron microscope, the composite particle (C1) having a structure in which the particle size was 80 to 120 nm and the first acrylic polymer (B1) was dispersed in the continuous phase of the first ethylene-unsaturated carboxylic acid copolymer (A1) was observed.

### (1) Second Coating Material

### Preparation Example 4 (A2 Dispersion Liquid)

As the second ethylene-unsaturated carboxylic acid copolymer (A2), CHEMIPEARL S100 (ethylene content in raw material: 85% by mass, kind of unsaturated carboxylic acid: methacrylic acid, sodium hydroxide neutralized product, solid content of 27%, manufactured by Mitsui Chemicals, Inc.) was prepared. Thus, the A2 dispersion liquid was obtained.

### Preparation Example 5 (B2 Dispersion Liquid)

Styrene (44.5 parts by mass), 52.5 parts by mass of n-butyl acrylate, 3 parts by mass of methacrylic acid, and 0.2 parts by mass of n-dodecyl mercaptan (molecular weight modifier) were emulsified in 40 parts by mass of deionized water by 0.4 parts by mass of sodium dodecylbenzenesulfonate (emulsifier), and the obtained emulsified mixture was added dropwise to the reaction vessel for 2 hours, and thereafter, retained at 80°C for 2 hours to complete the polymerization. Thus, the second acrylic polymer (B2) was formed. Thus, the B2 dispersion liquid was obtained.

### Preparation Example 6 (C2 Dispersion Liquid)

As the second ethylene-unsaturated carboxylic acid copolymer (A2), 200 parts by mass of CHEMIPEARL S100 (ethylene content in raw material: 85% by mass, kind of unsaturated carboxylic acid: methacrylic acid, sodium hydroxide neutralized product, solid content of 27%, manufactured by Mitsui Chemicals, Inc.) and 27 parts by mass of deionized water were charged into the reaction vessel, the temperature thereof was increased to 80°C under the nitrogen stream, and 0.3 parts by mass of potassium persulfate was added.

Separately, 48.2 parts by mass of styrene, 51.8 parts by mass of n-butyl acrylate, and 0.2 parts by mass of n-dodecyl mercaptan (molecular weight modifier) were emulsified in 40 parts by mass of deionized water by 0.4 parts by mass of sodium dodecylbenzenesulfonate (emulsifier), and the obtained emulsified mixture was added dropwise to the reaction vessel for 2 hours, and thereafter, retained at 80°C for 2 hours to complete the polymerization. Thus, the second acrylic polymer (B2) was formed, and the dispersion liquid of the composite particle (C2) was obtained.

When a portion of the obtained aqueous dispersion was dried, and the solid particle was observed with the electron microscope, the composite particle (C2) having a structure in which the particle size was 80 to 120 nm and the second acrylic polymer (B2) was dispersed in the continuous phase of the second ethylene-unsaturated carboxylic acid copolymer (A2) was observed.

### Examples 1 to 12 and Comparative Examples 1 to 8

### (1) Substrate

A cup base paper (manufactured by TOKYO PAPER MFG. CO. LTD., 200 g/m²) as the substrate was prepared. Next, the substrate was left to stand at 23°C and relative humidity of 50% for 24 hours, and the humidity thereof was adjusted.

### (2) First Coating Material

The A1 dispersion liquid, the B1 dispersion liquid, and the C1 dispersion liquid were selected as described in Tables 1 to 5. In addition, when two or more kinds of dispersion liquids were selected, these dispersion liquids were mixed. Thus, the first coating material was obtained.

Then, the first coating material was coated onto the substrate with a bar coater (No. 4). Thus, an undried coating film of the first coating material was obtained.

### (3) Second Coating Material

The A2 dispersion liquid, the B2 dispersion liquid, and the C2 dispersion liquid were selected as described in Tables 1 to 5. In addition, when the two or more kinds of dispersion liquids were selected, the dispersion liquids were mixed. Thus, the second coating material was obtained.

Then, the second coating material was coated onto the undried coating film of the first coating material with the bar coater (No. 5). Thus, the undried coating film of the second coating material was obtained. As a result, the laminate including the substrate, the undried coating film of the first coating material, and the undried coating film of the second coating material was obtained.

### (4) Drying

The laminate including the substrate, the undried coating film of the first coating material, and the undried coating film of the second coating material was heated at 120°C for 15 seconds.

Thus, the first resin layer as the dried coating film of the first coating material was obtained. Further, the second resin layer as the dried coating film of the second coating material was obtained. As a result, the laminate including the substrate, the first resin layer, and the second resin layer was obtained.

### <Evaluation>

### (1) Blocking Resistance of First Resin Layer

The cup base paper (manufactured by TOKYO PAPER MFG. CO. LTD., 200 g/m²) as the substrate was prepared. Next, the substrate was left to stand at 23°C and relative humidity of 50% for 24 hours, and the humidity thereof was adjusted.

Next, the A1 dispersion liquid, the B1 dispersion liquid, and the C1 dispersion liquid were selected as described in Tables 1 to 5. In addition, when two or more kinds of dispersion liquids were selected, these dispersion liquids were mixed. Thus, the first coating material was obtained.

Then, the first coating material was coated onto the substrate with the bar coater (No. 4). Thus, the undried coating film of the first coating material was obtained. Thus, the laminate including the substrate and the undried coating film of the first coating material was obtained.

Thereafter, the laminate including the substrate and the undried coating film of the first coating material was heated at 120°C for 15 seconds.

Thus, the first resin layer as the dried coating film of the first coating material was obtained. As a result, the laminate including the substrate and the first resin layer was obtained.

The laminate obtained as described above was cut into squares of being vertically and horizontally 5 cm, and the first resin layers were laminated on each other to be pressurized at 40°C for 10 seconds (0.5 kg/cm²). Then, the first resin layers were peeled with a tweezer, and the blocking resistance was evaluated. The criteria for evaluation are described below.

### Excellent: the laminated first resin layers were separated without resistance

Good: adhesion was observed in a portion of the first resin layer
Bad: adhesion was observed in the entire surface of the first resin layer

### (2) Blocking Resistance of Second Resin Layer

The above-described laminate including the substrate, the first resin layer, and the second resin layer was cut into squares of being vertically and horizontally 5 cm, and the second resin layers were laminated on each other to be pressurized at 40°C for 10 seconds (0.5 kg/cm²). Then, the second resin layers were peeled with the tweezer, and the blocking resistance was evaluated. The criteria for evaluation are described below.

### Excellent: the laminated second resin layers were separated without resistance

Good: adhesion was observed in a portion of the second resin layer
Bad: adhesion was observed in the entire surface of the second resin layer

### (3) Oil Resistance

In the above-described laminate including the substrate, the first resin layer, and the second resin layer, the oil resistance of the second resin layer was evaluated by a kit method. An evaluation method was in conformity with JAPAN TAPPI Paper Pulp Test Method (No. 41). The criteria for evaluation are described below.

### Excellent: kit value of 6 to 10

Good: kit value of 3 to 5
Bad: kit value of 0 to 2

### (4) Water Resistance

In the above-described laminate including the substrate, the first resin layer, and the second resin layer, the water resistance of the second resin layer was evaluated by a Cobb method. The evaluation method was in conformity with ISO 535 (1991). The criteria for evaluation are described below.

### Excellent: Cobb value of below 3.0

Good: Cobb value of 3.0 or more and below 5.0
Bad: Cobb value of 5.0 or more

### (5) Heat Sealing Properties

The two above-described laminates including the substrate, the first resin layer, and the second resin layer were prepared. Then, the two laminates were disposed so that each second resin layer was in contact to be heat-sealed. A heat sealing temperature was 140°C, heat sealing time was 1.0 second, and heat sealing pressure was 2 kg/cm².

Thereafter, peel strength of the heat-sealed portion was measured in a T-mode (50 mm/min) with a tensile strength measurement device (manufactured by Shimadzu Corporation). The criteria for evaluation are described below.

### Excellent: peel strength of 500 g/15 mm or more

Bad: peel strength of below 500 g/15 mm

### [Table 1]

**Table 1**

| No. | | | | Ex. 1 | Ex. 2 | Ex. 3 | Ex. 4 |
|---|---|---|---|---|---|---|---|
| A2 Dispersion Liquid (parts by mass) | A2 | Monomer for A2 (a2) | Ethylene | 85 | 85 | 85 | 85 |
| | | | MAc | 6.9 | 6.9 | 6.9 | 6.9 |
| | | | MAcNa | 8.1 | 8.1 | 8.1 | 8.1 |
| | Solid Concentration (mass%) | | | 27 | 27 | 27 | 27 |
| B2 Dispersion Liquid (parts by mass) | B2 | Monomer for B2 (b2) | ST | - | - | - | - |
| | | | nBA | - | - | - | - |
| | | | MAc | - | - | - | - |
| | | Tg (°C) | | - | - | - | - |
| | Solid Concentration (mass%) | | | - | - | - | - |
| C2 Dispersion Liquid (parts by mass) | A2 | Monomer for A2 (a2) | Ethylene | - | - | - | - |
| | | | MAc | - | - | - | - |
| | | | MAcNa | - | - | - | - |
| | B2 | Monomer for B2 (b2) | ST | - | - | - | - |
| | | | nBA | - | - | - | - |
| | | Tg (°C) | | - | - | - | - |
| | A2:B2 (mass ratio) | | | - | - | - | - |
| | Solid Concentration (mass%) | | | - | - | - | - |
| Second Resin Layer | Coated Amount (g/m²) | | | 3 | 3 | 3 | 3 |
| | A2:B2 (mass ratio) | | | 100:0 | 100:0 | 100:0 | 100:0 |
| Al Dispersion Liquid (parts by mass) | A1 | Monomer for A1 (a1) | Ethylene | - | 85 | 85 | 85 |
| | | | MAc | - | 6.9 | 6.9 | 6.9 |
| | | | MAcNa | - | 8.1 | 8.1 | 8.1 |
| | Solid Concentration (mass%) | | | - | 27 | 27 | 27 |
| B1 Dispersion Liquid (parts by mass) | B1 | Monomer for B1 (b1) | ST | - | - | - | - |
| | | | nBA | - | - | - | - |
| | | | MAc | - | - | - | - |
| | | Tg (°C) | | - | - | - | - |
| | Solid Concentration (mass%) | | | - | - | - | - |
| C1 Dispersion Liquid (parts by mass) | A1 | Monomer for A1 (a1) | Ethylene | 85 | 85 | 85 | 85 |
| | | | MAc | 6.9 | 6.9 | 6.9 | 6.9 |
| | | | MAcNa | 8.1 | 8.1 | 8.1 | 8.1 |
| | B1 | Monomer for B1 (b1) | ST | 48.2 | 48.2 | 48.2 | 48.2 |
| | | | nBA | 51.8 | 51.8 | 51.8 | 51.8 |
| | | Tg (°C) | | 0 | 0 | 0 | 0 |
| | A1:B1 (mass ratio) | | | 25:75 | 35:65 | 35:65 | 35:65 |
| | Solid Concentration (mass%) | | | 38 | 38 | 38 | 38 |
| First Resin Layer | Coated Amount (g/m²) | | | 3 | 3 | 3 | 3 |
| | Resin A1:Resin B1 (mass ratio) | | | 25:75 | 50:50 | 65:35 | 80:20 |
| Evaluation | Blocking Resistance (1) | | | Good | Excellent | Excellent | Excellent |
| | Blocking Resistance (2) | | | Excellent | Excellent | Excellent | Excellent |
| | Oil Resistance | | Kit Value | 10 | 8 | 7 | 5 |
| | | | Evaluation | Excellent | Excellent | Excellent | Good |
| | Water Resistance | | Cobb Value | 0.1 | 0.5 | 0.3 | 0.2 |
| | | | Evaluation | Excellent | Excellent | Excellent | Excellent |
| | Heat Sealing Properties | | g/15 mm | 641 | 576 | 591 | 641 |
| | | | Evaluation | Excellent | Excellent | Excellent | Excellent |

### [Table 2]

**Table 2**

| No. | | | | Ex. 5 | Ex. 6 | Ex. 7 | Ex. 8 |
|---|---|---|---|---|---|---|---|
| A2 Dispersion Liquid (parts by mass) | A2 | Monomer for A2 (a2) | Ethylene | 85 | 85 | 85 | 85 |
| | | | MAc | 6.9 | 6.9 | 6.9 | 6.9 |
| | | | MAcNa | 8.1 | 8.1 | 8.1 | 8.1 |
| | Solid Concentration (mass%) | | | 27 | 27 | 27 | 27 |
| B2 Dispersion Liquid (parts by mass) | B2 | Monomer for B2 (b2) | ST | - | - | - | - |
| | | | nBA | - | - | - | - |
| | | | MAc | - | - | - | - |
| | | Tg (°C) | | - | - | - | - |
| | Solid Concentration (mass%) | | | - | - | - | - |
| C2 Dispersion Liquid (parts by mass) | A2 | Monomer for A2 (a2) | Ethylene | - | - | - | - |
| | | | MAc | - | - | - | - |
| | | | MAcNa | - | - | - | - |
| | B2 | Monomer for B2 (b2) | ST | - | - | - | - |
| | | | nBA | - | - | - | - |
| | | Tg (°C) | | - | - | - | - |
| | A2:B2 (mass ratio) | | | - | - | - | - |
| | Solid Concentration (mass%) | | | - | - | - | - |
| Second Resin Layer | Coated Amount (g/m²) | | | 3 | 3 | 3 | 3 |
| | A2:B2 (mass ratio) | | | 100:0 | 100:0 | 100:0 | 100:0 |
| A1 Dispersion Liquid (parts by mass) | A1 | Monomer for A1 (a1) | Ethylene | 85 | 85 | 85 | 85 |
| | | | MAc | 6.9 | 6.9 | 6.9 | 6.9 |
| | | | MAcNa | 8.1 | 8.1 | 8.1 | 8.1 |
| | Solid Concentration (mass%) | | | 27 | 27 | 27 | 27 |
| B1 Dispersion Liquid (parts by mass) | B1 | Monomer for B1 (b1) | ST | - | - | - | - |
| | | | nBA | - | - | - | - |
| | | | MAc | - | - | - | - |
| | | Tg (°C) | | - | - | - | - |
| | Solid Concentration (mass%) | | | - | - | - | - |
| C1 Dispersion Liquid (parts by mass) | A1 | Monomer for A1 (a1) | Ethylene | 85 | 85 | 85 | 85 |
| | | | MAc | 6.9 | 6.9 | 6.9 | 6.9 |
| | | | MAcNa | 8.1 | 8.1 | 8.1 | 8.1 |
| | B1 | Monomer for B1 (b1) | ST | 48.2 | 66.6 | 37.3 | 25.1 |
| | | | nBA | 51.8 | 42.1 | 62.7 | 74.9 |
| | | Tg (°C) | | 0 | 15 | -15 | -30 |
| | A1:B1 (mass ratio) | | | 35:65 | 35:65 | 35:65 | 35:65 |
| | Solid Concentration (mass%) | | | 38 | 38 | 38 | 38 |
| First Resin Layer | Coated Amount (g/m²) | | | 3 | 3 | 3 | 3 |
| | Resin Al:Resin B1 (mass ratio) | | | 90:10 | 65:35 | 65:35 | 65:35 |
| Evaluation | Blocking Resistance (1) | | | Excellent | Excellent | Excellent | Good |
| | Blocking Resistance (2) | | | Excellent | Excellent | Excellent | Excellent |
| | Oil Resistance | | Kit Value | 4 | 4 | 8 | 10 |
| | | | Evaluation | Good | Good | Excellent | Excellent |
| | Water Resistance | | Cobb Value | 0 | 0.2 | 0 | 0 |
| | | | Evaluation | Excellent | Excellent | Excellent | Excellent |
| | Heat Sealing Properties | | g/15 mm | 675 | 716 | 587 | 513 |
| | | | Evaluation | Excellent | Excellent | Excellent | Excellent |

### [Table 3]

**Table 3**

| No. | | | | Ex. 9 | Ex. 10 | Ex. 11 | Ex. 12 |
|---|---|---|---|---|---|---|---|
| A2 Dispersion Liquid (parts by mass) | A2 | Monomer for A2 (a2) | Ethylene | 85 | 85 | 85 | 85 |
| | | | MAc | 6.9 | 6.9 | 6.9 | 6.9 |
| | | | MAcNa | 8.1 | 8.1 | 8.1 | 8.1 |
| | Solid Concentration (mass%) | | | 27 | 27 | 27 | 27 |
| B2 Dispersion Liquid (parts by mass) | B2 | Monomer for B2 (b2) | ST | - | - | - | 44.5 |
| | | | nBA | - | - | - | 52.5 |
| | | | MAc | - | - | - | 3 |
| | | Tg (°C) | | - | - | - | 0 |
| | Solid Concentration (mass%) | | | - | - | - | 45 |
| C2 Dispersion Liquid (parts by mass) | A2 | Monomer for A2 (a2) | Ethylene | - | - | - | - |
| | | | MAc | - | - | - | - |
| | | | MAcNa | - | - | - | - |
| | B2 | Monomer for B2 (b2) | ST | - | - | - | - |
| | | | nBA | - | - | - | - |
| | | Tg (°C) | | - | - | - | - |
| | A2:B2 (mass ratio) | | | - | - | - | - |
| | Solid Concentration (mass%) | | | - | - | - | - |
| Second Resin Layer | Coated Amount (g/m²) | | | 3 | 3 | 3 | 3 |
| | A2:B2 (mass ratio) | | | 100:0 | 100:0 | 100:0 | 95:5 |
| A1 Dispersion Liquid (parts by mass) | A1 | Monomer for A1 (a1) | Ethylene | 85 | 85 | 85 | 85 |
| | | | MAc | 6.9 | 6.9 | 6.9 | 6.9 |
| | | | MAcNa | 8.1 | 8.1 | 8.1 | 8.1 |
| | Solid Concentration (mass%) | | | 27 | 27 | 27 | 27 |
| B1 Dispersion Liquid (parts by mass) | B1 | Monomer for B1 (b1) | ST | 44.5 | 44.5 | 44.5 | - |
| | | | nBA | 52.5 | 52.5 | 52.5 | - |
| | | | MAc | 3 | 3 | 3 | - |
| | | Tg (°C) | | 0 | 0 | 0 | - |
| | Solid Concentration (mass%) | | | 45 | 45 | 45 | - |
| C1 Dispersion Liquid (parts by mass) | A1 | Monomer for A1 (a1) | Ethylene | - | - | - | 85 |
| | | | MAc | - | - | - | 6.9 |
| | | | MAcNa | - | - | - | 8.1 |
| | B1 | Monomer for B1 (b1) | ST | - | - | - | 48.2 |
| | | | nBA | - | - | - | 51.8 |
| | | Tg (°C) | | - | - | - | 0 |
| | A1:B1 (mass ratio) | | | - | - | - | 35:65 |
| | Solid Concentration (mass%) | | | - | - | - | 38 |
| First Resin Layer | Coated Amount (g/m²) | | | 3 | 3 | 3 | 3 |
| | Resin A1:Resin B1 (mass ratio) | | | 50:50 | 65:35 | 80:20 | 65:35 |
| Evaluation | Blocking Resistance (1) | | | Good | Excellent | Excellent | Excellent |
| | Blocking Resistance (2) | | | Excellent | Excellent | Excellent | Excellent |
| | Oil Resistance | | Kit Value | 7 | 5 | 4 | 9 |
| | | | Evaluation | Excellent | Good | Good | Excellent |
| | Water Resistance | | Cobb Value | 0 | 0 | 0 | 0 |
| | | | Evaluation | Excellent | Excellent | Excellent | Excellent |
| | Heat Sealing Properties | | g/15 mm | 521 | 570 | 612 | 678 |
| | | | Evaluation | Excellent | Excellent | Excellent | Excellent |

### [Table 4]

**Table 4**

| No. | | | | Comparative Ex. 1 | Comparative Ex 2 | Comparative Ex. 3 | Comparative Ex 4 |
|---|---|---|---|---|---|---|---|
| A2 Dispersion Liquid (parts by mass) | A2 | Monomer for A2 (a2) | Ethylene | 85 | 85 | 85 | 85 |
| | | | MAc | 6.9 | 6.9 | 6.9 | 6.9 |
| | | | MAcNa | 8.1 | 8.1 | 8.1 | 8.1 |
| | Solid Concentration (mass%) | | | 27 | 27 | 27 | 27 |
| B2 Dispersion Liquid (parts by mass) | B2 | Monomer for B2 (b2) | ST | - | - | - | - |
| | | | nBA | - | - | - | - |
| | | | MAc | - | - | - | - |
| | | Tg (°C) | | - | - | - | - |
| | Solid Concentration (mass%) | | | - | - | - | - |
| C2 Dispersion Liquid (parts by mass) | A2 | Monomer for A2 (a2) | Ethylene | - | - | - | - |
| | | | MAc | - | - | - | - |
| | | | MAcNa | - | - | - | - |
| | B2 | Monomer for B2 (b2) | ST | - | - | - | - |
| | | | nBA | - | - | - | - |
| | | Tg (°C) | | - | - | - | - |
| | A2:B2 (mass ratio) | | | - | - | - | - |
| | Solid Concentration (mass%) | | | - | - | - | - |
| Second Resin Layer | Coated Amount (g/m²) | | | 3 | 3 | 3 | 3 |
| | A2:B2 (mass ratio) | | | 100:0 | 100:0 | 100:0 | 100:0 |
| A1 Dispersion Liquid (parts by mass) | A1 | Monomer for A1 (a1) | Ethylene | - | 85 | 85 | 85 |
| | | | MAc | - | 6.9 | 6.9 | 6.9 |
| | | | MAcNa | - | 8.1 | 8.1 | 8.1 |
| | Solid Concentration (mass%) | | | - | 27 | 27 | 27 |
| B1 Dispersion Liquid (parts by mass) | B1 | Monomer for B1 (b1) | ST | - | - | - | - |
| | | | nBA | - | - | - | - |
| | | | MAc | - | - | - | - |
| | | Tg (°C) | | - | - | - | - |
| | Solid Concentration (mass%) | | | - | - | - | - |
| C1 Dispersion Liquid (parts by mass) | A1 | Monomer for A1 (a1) | Ethylene | 85 | 85 | 85 | 85 |
| | | | MAc | 6.9 | 6.9 | 6.9 | 6.9 |
| | | | MAcNa | 8.1 | 8.1 | 8.1 | 8.1 |
| | B1 | Monomer for B1 (b1) | ST | 48.2 | 48.2 | 60.9 | 20.7 |
| | | | nBA | 51.8 | 51.8 | 39.1 | 79.3 |
| | | Tg (°C) | | 0 | 0 | 20 | -35 |
| | A1:B1 (mass ratio) | | | 20:80 | 35:65 | 35:65 | 35:65 |
| | Solid Concentration (mass%) | | | 38 | 38 | 38 | 38 |
| First Resin Layer | Coated Amount (g/m²) | | | 3 | 3 | 3 | 3 |
| | Resin Al:Resin B1 (mass ratio) | | | 20:80 | 95:5 | 65:35 | 65:35 |
| Evaluation | Blocking Resistance (1) | | | Bad | Excellent | Excellent | Bad |
| | Blocking Resistance (2) | | | Excellent | Excellent | Excellent | Excellent |
| | Oil Resistance | | Kit Value | 8 | 0 | 0 | 9 |
| | | | Evaluation | Excellent | Bad | Bad | Excellent |
| | Water Resistance | | Cobb Value | 0.1 | 3.0 | 3.5 | 0 |
| | | | Evaluation | Excellent | Good | Good | Excellent |
| | Heat Sealing Properties | | g/15 mm | 603 | 642 | 561 | 596 |
| | | | Evaluation | Excellent | Excellent | Excellent | Excellent |

### [Table 5]

**Table 5**

| No. | | | | Comparative Ex. 5 | Comparative Ex 6 | Comparative Ex. 7 | Comparative Ex 8 |
|---|---|---|---|---|---|---|---|
| A2 Dispersion Liquid (parts by mass) | A2 | Monomer for A2 (a2) | Ethylene | 85 | 85 | - | - |
| | | | MAc | 6.9 | 6.9 | - | - |
| | | | MAcNa | 8.1 | 8.1 | - | - |
| | Solid Concentration (mass%) | | | 27 | 27 | - | - |
| B2 Dispersion Liquid (parts by mass) | B2 | Monomer for B2 (b2) | ST | - | - | - | - |
| | | | nBA | - | - | - | - |
| | | | MAc | - | - | - | - |
| | | Tg (°C) | | - | - | - | - |
| | Solid Concentration (mass%) | | | - | - | - | - |
| C2 Dispersion Liquid (parts by mass) | A2 | Monomer for A2 (a2) | Ethylene | - | - | 85 | - |
| | | | MAc | - | - | 6.9 | - |
| | | | MAcNa | - | - | 8.1 | - |
| | B2 | Monomer for B2 (b2) | ST | - | - | 48.2 | - |
| | | | nBA | - | - | 51.8 | - |
| | | Tg (°C) | | - | - | 0 | - |
| | A2:B2 (mass ratio) | | | - | - | 65:35 | - |
| | Solid Concentration (mass%) | | | - | - | 32 | - |
| Second Resin Layer | Coated Amount (g/m²) | | | 3 | 3 | 3 | 0 |
| | A2:B2 (mass ratio) | | | 100:0 | 100:0 | 100:0 | - |
| A1 Dispersion Liquid (parts by mass) | A1 | Monomer for A1 (a1) | Ethylene | 85 | - | - | 85 |
| | | | MAc | 6.9 | - | - | 6.9 |
| | | | MAcNa | 8.1 | | - | 8.1 |
| | Solid Concentration (mass%) | | | 27 | - | - | 27 |
| B1 Dispersion Liquid (parts by mass) | B1 | Monomer for B1 (b1) | ST | - | 44.5 | - | - |
| | | | nBA | - | 52.5 | - | - |
| | | | MAc | - | 3 | - | - |
| | | Tg (°C) | | - | 0 | - | - |
| | Solid Concentration (mass%) | | | - | 45 | - | - |
| C1 Dispersion Liquid (parts by mass) | A1 | Monomer for A1 (a1) | Ethylene | - | - | 85 | 85 |
| | | | MAc | - | - | 6.9 | 6.9 |
| | | | MAcNa | - | - | 8.1 | 8.1 |
| | B1 | Monomer for B1 (b1) | ST | - | - | 48.2 | 48.2 |
| | | | nBA | - | - | 51.8 | 51.8 |
| | | Tg (°C) | | - | - | 0 | 0 |
| | A1:B1 (mass ratio) | | | - | - | 35:65 | 35:65 |
| | Solid Concentration (mass%) | | | - | - | 38 | 38 |
| First Resin Layer | Coated Amount (g/m²) | | | 3 | 3 | 3 | 6 |
| | Resin Al:Resin B1 (mass ratio) | | | 100:0 | 0:100 | 65:35 | 65:35 |
| Evaluation | Blocking Resistance (1) | | | Excellent | Bad | Excellent | Excellent |
| | Blocking Resistance (2) | | | Excellent | Excellent | Bad | Bad |
| | Oil Resistance | | Kit Value | 0 | 1 | 7 | 0 |
| | | | Evaluation | Bad | Bad | Excellent | Bad |
| | Water Resistance | | Cobb Value | 5.1 | 0 | 0 | 5.4 |
| | | | Evaluation | Bad | Excellent | Excellent | Bad |
| | Heat Sealing Properties | | g/15 mm | 642 | 0 | 560 | 560 |
| | | | Evaluation | Excellent | Bad | Excellent | Excellent |

The details of abbreviations in Tables are described below.
MAc: methacrylic acid
MacNa: sodium methacrylate
ST: styrene
nBA: n-butyl acrylate
A1: first ethylene-unsaturated carboxylic acid copolymer (A1)
A2: second ethylene-unsaturated carboxylic acid copolymer (A2)
B1: first acrylic polymer (B1)
B2: second acrylic polymer (B2)
C1: composite particle (C1)
C2: composite particle (C2)

### INDUSTRIAL APPLICATION

The laminate of the present invention is preferably used in the packaging material field.

### Description of Reference Numerals

- 1: Laminate
- 2: Substrate
- 3: First resin layer
- 4: Second resin layer

## Claims

1. A laminate comprising:
a substrate,
a first resin layer disposed on at least one side of the substrate and containing a first resin component, and
a second resin layer disposed on one side of the first resin layer and containing a second resin component, wherein
the first resin component contains a first ethylene-unsaturated carboxylic acid copolymer (A1) and a first acrylic polymer (B1);
a ratio of the first ethylene-unsaturated carboxylic acid copolymer (A1) is 25% by mass or more and 90% by mass or less with respect to the total amount of the first resin component;
a glass transition temperature of the first acrylic polymer (B1) is -30°C or more and 15°C or less;
the second resin component contains a second ethylene-unsaturated carboxylic acid copolymer (A2); and
a ratio of the second ethylene-unsaturated carboxylic acid copolymer (A2) is 95% by mass or more with respect to the total amount of the second resin component.

2. The laminate according to claim 1, wherein
the first resin component contains a composite particle (C1) containing the first ethylene-unsaturated carboxylic acid copolymer (A1) and the first acrylic polymer (B1).

3. The laminate according to claim 1, wherein
an amount of the first resin layer is 1 g/m² or more and 14 g/m² or less,
an amount of the second resin layer is 1 g/m² or more and 14 g/m² or less, and
the total sum of the amount of the first resin layer and the amount of the second resin layer is 2 g/m² or more and 15 g/m² or less.

## Patentansprüche

1. Laminat, umfassend:
ein Substrat,
eine erste Harzschicht, die auf mindestens einer Seite des Substrats angeordnet ist und eine erste Harzkomponente enthält, und
eine zweite Harzschicht, die auf einer Seite der ersten Harzschicht angeordnet ist und eine zweite Harzkomponente enthält, wobei
die erste Harzkomponente ein erstes ethylenisch ungesättigtes Carbonsäure-Copolymer (A1) und ein erstes Acrylpolymer (B1) enthält;
ein Anteil des ersten ethylenisch ungesättigten Carbonsäure-Copolymers (A1) 25 Massen-% oder mehr und 90 Massen-% oder weniger, bezogen auf die Gesamtmenge der ersten Harzkomponente, beträgt;
eine Glasübergangstemperatur des ersten Acrylpolymers (B1) -30°C oder mehr und 15°C oder weniger beträgt;
die zweite Harzkomponente ein zweites ethylenisch ungesättigtes Carbonsäure-Copolymer (A2) enthält; und
ein Anteil des zweiten ethylenisch ungesättigten Carbonsäure-Copolymers (A2) 95 Massen-% oder mehr, bezogen auf die Gesamtmenge der zweiten Harzkomponente, beträgt.

2. Laminat gemäß Anspruch 1, wobei
die erste Harzkomponente ein Kompositpartikel (C1) enthält, das das erste ethylenisch ungesättigte Carbonsäure-Copolymer (A1) und das erste Acrylpolymer (B1) enthält.

3. Laminat gemäß Anspruch 1, wobei
eine Menge der ersten Harzschicht 1 g/m² oder mehr und 14 g/m² oder weniger beträgt,
eine Menge der zweiten Harzschicht 1 g/m² oder mehr und 14 g/m² oder weniger beträgt, und
die Gesamtsumme der Menge der ersten Harzschicht und der Menge der zweiten Harzschicht 2 g/m² oder mehr und 15 g/m² oder weniger beträgt.

## Revendications

1. Stratifié comprenant :
un substrat,
une première couche de résine disposée sur au moins un côté du substrat et contenant un premier composant résineux, et
une deuxième couche de résine disposée sur un côté de la première couche de résine et contenant un deuxième composant résineux,
dans lequel le premier composant résineux contient un premier copolymère d'éthylène-acide carboxylique insaturé (A1) et un premier polymère acrylique (B1) ;
un rapport du premier copolymère d'éthylène-acide carboxylique insaturé (A1) est de 25 % en masse ou plus et de 90 % en masse ou moins par rapport à la quantité totale du premier composant résineux ;
une température de transition vitreuse du premier polymère acrylique (B1) est de -30 °C ou plus et de 15 °C ou moins ;
le deuxième composant résineux contient un deuxième copolymère d'éthylène-acide carboxylique insaturé (A2) ; et
un rapport du deuxième copolymère d'éthylène-acide carboxylique insaturé (A2) est de 95 % en masse ou plus par rapport à la quantité totale du deuxième composant résineux.

2. Stratifié selon la revendication 1,
dans lequel le premier composant résineux contient une particule composite (C1) contenant le premier copolymère d'éthylène-acide carboxylique insaturé (A1) et le premier polymère acrylique (B1).

3. Stratifié selon la revendication 1,
dans lequel une quantité de la première couche de résine est de 1 g/m² ou plus et de 14 g/m² ou moins,
une quantité de la deuxième couche de résine est de 1 g/m² ou plus et de 14 g/m² ou moins, et
la somme totale de la quantité de la première couche de résine et de la quantité de la deuxième couche de résine est de 2 g/m² ou plus et de 15 g/m² ou moins.
